# EUROPEAN PATENT APPLICATION

(11) **EP 2 261 933 A1**
(43) Date of publication of application: **15.12.2010**
(21) Application number: 09730684.9
(22) Date of filing: 09.02.2009
(51) Int. Cl.: H01G 4/008, H01G 4/10

(54) **CAPACITOR AND METHOD FOR MANUFACTURING THE SAME**

(30) Priority: 08.04.2008 JP 2008100040
(71) Applicant: Murata Manufacturing Co. Ltd., Kyoto 617-8555 (JP)
(72) Inventor: KUNISHI, Tatsuo, Kyoto 617-8555 (JP); SAITO, Junichi, Kyoto 617-8555 (JP); MEGUMI, Daisuke, Kyoto 617-8555 (JP); UEDA, Yoshinori, Kyoto 617-8555 (JP); KAINUMA, Yasuaki, Kyoto 617-8555 (JP); KOBAYASHI, Mikiya, Kyoto 617-8555 (JP); OTANI, Shinji, Kyoto 617-8555 (JP)
(74) Representative: Herrmann, Uwe
(86) International application number: PCT/JP2009/052136
(87) International publication number: WO 2009/125620

(57) **Abstract**

Disclosed is a capacitor including a dielectric in the form of a film, which has a high capacitance and a low equivalent series resistance. The capacitor includes a conductive base material (2) composed of a plating film having a specific surface area of 100 mm²/mm³ or more, a dielectric film (3) formed along the surface of the conductive base material (2), and an opposed conductor (4) formed so as to be opposed to the conductive base material (2) with the dielectric film (3) interposed therebetween. The plating film constituting the conductive base material (2) is formed by electrolytic plating or electroless plating, and may have a porous form, wire-like form or broccoli-like form.

## Description

### TECHNICAL FIELD

The present invention relates to a capacitor and a method for manufacturing the capacitor, and more particularly, relates to a capacitor which has a structure with a dielectric film formed along the surface of a conductive base material having a high specific surface area, and a method for manufacturing the capacitor.

### BACKGROUND ART

In recent years, capacitors which have the following characteristics have been required along with the reduction in size and the increase in frequency for electronic devices and electronic circuits.

### (1) high capacitance

### (2) low ESR (equivalent series resistance)

The capacitors which satisfy the characteristic (1) include tantalum electrolytic capacitors. However, the tantalum electrolytic capacitors fail to satisfy the characteristic (2), which are thus not suitable for use at the higher frequencies. In addition, costly tantalum results in the high cost of the tantalum electrolytic capacitors

In addition, the capacitors which satisfy the characteristic (1) include aluminum electrolytic capacitors. However, the aluminum electrolytic capacitors not only fail to satisfy the characteristic (2), but also have the problem of short lifetimes,

The capacitors which satisfy the characteristic (2) and have superior lifetime characteristics include laminated ceramic capacitors. However, the laminated ceramic capacitors have the problem of insufficiency in terms of the characteristic (1).

Against this background, for example, Japanese Patent Application Laid-Open No. 11-340091 (Patent Document 1) discloses a capacitor obtained by forming a dielectric film in accordance with supercritical coating on the surface of a conductive porous base material having a high specific surface area, and further forming a counter electrode layer on the dielectric film.

More specifically, the conductive porous base material is provided by pressing a phenolic activated carbon powder, The dielectric film is provided by a TiO₂ film obtained by coating the base material with tetrabutoxy titanium in accordance with supercritical coating and annealing the tetrabutoxy titanium. The counter electrode layer is provided by an ITO layer obtained by coating the TiO₂ film with tetraethoxytin and triisopropoxyindium in accordance with supercritical coating.

However, the capacitor described in Patent Document 1 has the following problems to be solved.

(1) Patent Document 1 discloses, in addition to the activated carbon, porous metals such as porous aluminum and porous tantalum, porous oxides such as porous ruthenium oxide, porous vanadium oxide, porous indium oxide, porous tin oxide, and porous nickel oxide, and the like, as examples of the material constituting the conductive porous base material.

However, since the above porous aluminum and porous tantalum are valve metals, it is believed that the porous aluminum and porous tantalum are likely to have an oxide film formed on their surfaces and thus develop sites with high contact resistance, thereby causing an increase in the ESR of the capacitor. In addition, since it is believed that the activated carbon and porous oxides themselves have high resistivities, it seems that the ESR will be increased likewise in the case of the activated carbon and porous oxides,

As described above, none of the conductive porous base materials disclosed in Patent Document 1 satisfies all of such conditions as the inexpensiveness, low resistivity and high specific surface area. Therefore, conductive base materials for capacitors have been required which satisfy all of these conditions.

(2) The use of special method called supercritical coating for the formation of the dielectric film makes the process extremely cumbersome and complicated. Therefore, conductive porous base materials are required which can be adapted to a variety of methods for forming the dielectric film. In this case, conductive porous base materials are required which have favorable adhesion to the dielectric film, because the poor adhesion and low coverage of the dielectric film increase the percent defective of short-circuiting.
Patent Document 1: Japanese Patent Application Laid-Open No. 11-340091

### DISCLOSURE OF THE INVENTION

### Problems to be Solved by the Invention

Therefore, an object of the present invention is to provide a capacitor and a method for manufacturing the capacitor, which can achieve an increase in capacitance and a reduction in ESR, while solving the problems as described above.

### Means for Solving the Problems

In order to solve the above problems, the present invention is firstly directed to a capacitor including a conductive base material; a dielectric film formed along a surface of the conductive base material; and an opposed conductor formed so as to be opposed to the conductive base material with the dielectric film interposed therebetween, wherein the conductive base material includes a plating film having a specific surface area of 100 mm²/mm³ or more.

In the capacitor according to the present invention, it is favorable that the conductive base material is composed of a plating deposition containing at least one of Ni and Cu as a main constituent.

In the capacitor according to the present invention, the plating film constituting the conductive base material may have a porous form, a wire-like form, or a broccoli-like form. It is to be noted that the "wire-like form" and "broccoli-like form" both refer to the surface of the plating film with numerous protrusions formed. The form with relatively elongated protrusions is referred to as the "wire-like form", whereas the form with relatively short and small protrusions is referred to as the "broccoli -like form".

The present invention is directed to a method for manufacturing a capacitor which has the structure as described above.

A method for manufacturing a capacitor according to the present invention includes the steps of: forming a conductive base material composed of a plating film having a specific surface area of 100 mm²/mm³ or more by electrolytic plating or electroless plating; forming a dielectric film along a surface of the conductive base material; and forming an opposed conductor on a surface of the dielectric film.

A plating solution for use in the electrolytic plating or electroless plating described above preferably contains a surfactant having an acetylene group.

### Advantageous Effects of the Invention

According to the present invention, the conductive base material is composed of the plating film, thus allowing an increase in specific surface area, so that the capacitor can be provided with a high capacitance. In addition, the conductive base material is composed of the plating film, thus allowing an increase in conductivity, so that the capacitor can be provided with ESR reduced.

In addition, according to the present invention, the dielectric film can be formed easily in accordance with various methods so as to reduce the thickness and provide a high coverage.

Furthermore, according to the present invention, the conductive base material which is the plating film has a thickness easily controlled, thus expanding the degree of freedom in design.

In the capacitor according to the present invention, when the conductive base material is composed of the plating deposition containing at least one of Ni and Cu as a main constituent, the conductivity of the conductive base material can be increased with more certainty at lower cost, and the capacitor with its ESR reduced can be thus achieved with more certainty at lower cost. In addition, the use of at least one of Ni and Cu as a main constituent makes it easy to form a plating film having a high specific surface area.

In the capacitor according to the present invention, the porous form, wire-like form, or broccoli-like form of the plating film constituting the conductive base material is suitable for increasing the specific surface area of the plating film, and it is possible to achieve a specific surface area of 500 to 1200 mm²/mm³ in the case of the porous form, a specific surface area of 20000 to 70000 mm²/mm³ in the case of the wire-like form, and a specific surface area of 70000 mm²/mm³ or more in the case of the broccoli-like form.

In accordance with the method for manufacturing a capacitor according to the present invention, the electrolytic plating or the electroless plating is used for forming the conductive base material composed of the plating film having a specific surface area of 100 mm²/mm³ or more. The electrolytic plating or the electroless plating requires no special treatment, and is a method which is capable of providing a plating film having a high specific surface area in the case of using a highly conductive metal such as Ni and Cu. While conventional methods include a method of plating a foamed resin with a metal and then burning the foamed resin to obtain a metal porous material, this method has the problem of process complication, and further has the problem of difficulty in increasing the specific surface area.

In addition, in accordance with the method for manufacturing a capacitor according to the present invention, anodic oxidation of the conductive base material is not carried out for the formation of the dielectric film. Thus, the component of the dielectric film and the method for the formation of the dielectric film can be selected without depending on the material of the conductive base material. More specifically, while a material for producing a high-dielectric-constant oxide has to be selected as the material of the conductive base material in the case of forming the dielectric film by anodic oxidation, the material of the conductive base material is not subject to the restriction as described above according to the present invention.

When the plating solution for use in the electrolytic plating or the electroless plating contains a surfactant having an acetylene group, this surfactant serves as an active component for increasing the specific surface area of the plating film.

### BRIEF EXPLANATION OF DRAWINGS

FIG. 1 is a cross sectional view schematically showing an enlarged portion of a capacitor 1 according to an embodiment of the present invention.
FIG. 2 is an SEM photograph of the surface of a porous electroless Ni plating film manufactured in Example 1.
FIG. 3 is a photograph of an SIM image of a cross section of a sample with a dielectric film composed of perylene formed on the surface of an electroless Ni plating film in Example 1.
FIG. 4 is an SEM photograph of the surface of a wire-like electroless Ni plating film manufactured in Example 2.
FIG. 5 is an SEM photograph of the surface of a broccoli-like electroless Ni plating film manufactured in Example 3.

### DESCRIPTION OF REFERENCE SYMBOLS

- 1: capacitor
- 2: conductive base material
- 3: dielectric film
- 4: opposed conductor

### BEST MODE FOR CARRYING OUT THE INVENTION

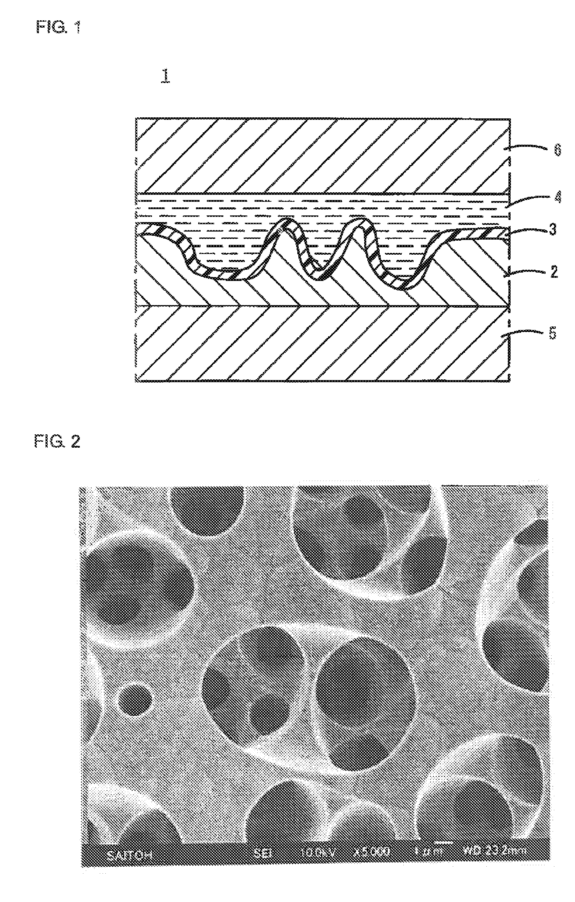

FIG. 1 is a cross sectional view schematically showing an enlarged portion of a capacitor 1 according to the present invention.

The capacitor 1 includes a conductive base material 2, a dielectric film 3 formed along the surface of the conductive base material 2, and an opposed conductor 4 formed so as to be opposed to the conductive base material 2 with the dielectric film interposed therebetween. Furthermore, a first extraction electrode 5 is provided so as to come into contact with the conductive base material 2, whereas a second extraction electrode 6 is provided so as to come into contact with the opposed conductor 4. The first and second extraction electrodes 5 and 6 are composed of metal foil such as, for example, copper foil and aluminum foil.

The conductive base material 2 is composed of a plating film deposited by carrying out electrolytic plating or electroless plating on the first extraction electrode 5, and has a specific surface area of 100 mm²/mm³ or more. The electrolytic plating or electroless plating requires no special treatment, and allows a plating film having a high specific surface area of 100 mm²/mm³ or more to be easily obtained. Further, a plating solution for use in the electrolytic plating or electroless plating preferably contains a surfactant having an acetylene group, because this surfactant serves as an active component for increasing the specific surface area of the plating film.

The plating film constituting the conductive base material 2 is preferably composed of a plating deposition containing Ni as a main constituent or a plating deposition containing Cu as a main constituent. More specifically, the plating film constituting the conductive base material 2 is composed of Ni, an Ni alloy, Cu, a Cu alloy, an Ni-P alloy, or the like. The use of at least one of Ni and Cu as a main constituent as described above allows the conductivity of the conductive base material 2 to be increased with more certainty at lower cost, and thus allows the ESR of the capacitor 1 to be reduced with more certainty at lower cost. In addition, the use of at least one of Ni and Cu as a main constituent also produces the effect of easily increasing the specific surface area of the conductive base material 2.

While FIG. 1 shows the plating film constituting the conductive base material 2 to have a porous form, the plating film constituting the conductive base material 2 may have other form, a wire-like form or a broccoli-like form, as will be described later. It has been confirmed that it is possible to achieve specific surface areas of 500 to 1200 mm²/mm³, 20000 to 70000 mm²/mm³, and 70000 mm²/mm³ or more respectively when the plating film constituting the conductive base material 2 has a porous form, a wire-like form, and a broccoli-like form.

The dielectric film 3 can be formed in accordance with various methods. The methods for forming the dielectric film 3 typically include the following methods.

First of all, a method is cited in which an organic dielectric film such as parylene is formed by CVD on the conductive base material 2. Second, a method is cited in which an inorganic dielectric film such as barium titanate is formed by CVD on the conductive base material 2. Third, a method is cited in which a metal oxide such as a titanium oxide is deposited by anode electrolysis on the conductive base material 2.

In addition, the methods for forming the dielectric film 3 include methods such as equilibrium reaction, cathode electrolysis, electrophoresis, displacement deposition, hydrothermal synthesis, a sol-gel method, dip coating, electropolymerization, oxide deposition, electroless deposition, vacuum deposition, sputtering, ion plating, MBE, laser abrasion, thermal CVD, plasma CVD, optical CVD, MOCVD, ALE, and an aerosol method.

In addition, a film composed of a valve metal such as aluminum and tantalum may be deposited on the conductive base material 2, and oxidized to produce an oxide film as the dielectric film 3.

It is to be noted that it is not necessary to form the dielectric film 3 so as to be brought into direct contact with the surface of the conductive base material 2, and what is necessary is to form the dielectric film 3 along the surface of the conductive base material 2.

The opposed conductor 4 can be formed with the use of various materials in accordance with various methods of formation. In FIG. 1, the opposed conductor 4 is composed of an electrolyte, and this electrolyte is provided so as to fill the space of the porous portion of the conductive base material 2 with the dielectric film 3 formed on its surface. The opposed conductor 4 may be composed of other material, a conductive polymer, or the like.

### Example 1

### <Pretreatment>

Cu foil with a thickness of 10 µm to serve as the first extraction electrode was prepared, and immersed in a Pd sol to provide the Cu foil with Pd fine particles thereon to serve as a catalyst for a reductant in electroless plating.

### <Formation of Conductive Base Material>

The electroless Ni plating solution and plating conditions shown in the following Table 1 were used to form, on the Cu foil, an electroless Ni plating film to serve as the conductive base material. In this case, three types of samples with their thicknesses of 5 µm, 10 µm, and 15 µm were manufactured as the electroless Ni plating film. In addition, a sample with no electroless Ni plating film formed (with its thickness of 0 µm) was also left as a comparative example.

**[Table 1]**

| | |
|---|---|
| Nickel Chloride | 0.08 mol/L |
| Sodium Hypophosphite | 0.29 mol/L |
| Citric Acid | 0.05 mol/L |
| Ammonium Chloride | 0.65 mol/L |
| Acetylene Glycol-Based Additive | 1 g/L |
| pH | 9.5 |
| Bath Temperature | 80°C |

The surface of the obtained electroless Ni plating film was observed by an SEM (scanning electron microscope). As a result, it was confirmed that the plating film had a porous form. FIG. 2 shows an SEM photograph of the surface of the electroless Ni plating film with a thickness of 5 µm.

### <Formation of Dielectric Film>

Next, a dielectric film composed of poly-para-xylylene (hereinafter, abbreviated as "parylene") was formed by CVD on the surface of the electroless Ni plating film. The thickness of the dielectric film composed of perylene was about 300 nm.

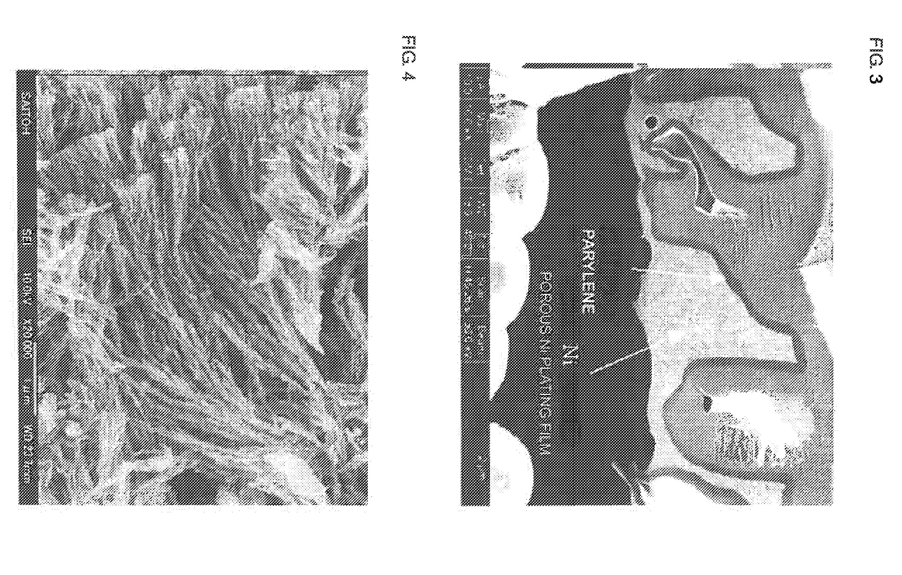

At this stage, a cross section was exposed by FIB (Focused Ion Beam), and an SIM (Scanning Ion Microscopy) image of this cross section was observed. FIG. 3 shows a photograph of the sample with the Ni-plating film of 5 µm in thickness formed.

It is to be noted that a dielectric film composed of parylene was formed by CVD directly on the Cu foil in the case of the comparative example.

### <Formation of Opposed Conductor>

Next, an ammonium adipate solution (pH 6.7) with a concentration of 150 g/L as an electrolyte to serve as the opposed conductor was applied to the surface of the dielectric film composed of perylene to fill the porous portion. Then, aluminum foil to serve as the second extraction electrode was provided so as to come into contact with the electrolyte, thereby completing a capacitor as each sample.

### <Evaluation and Consideration>

For the samples with the electroless Ni plating film formed to serve as the conductive base material, the specific surface area of the electroless Ni plating film per volume (S/V) in accordance with a BET method was 700 mm²/mm³. As described above, the use of the porous Ni plating film for the conductive base material can provide the conductive base material having a high specific surface area.

Next, an LCR meter was used to measure the capacitance between the Cu foil to serve as the first extraction electrode and the aluminum foil to serve as the second extraction electrode under respective conditions of 0.5 Arms 120 Hz, and room temperature. Table 2 shows below the relationship between the capacitance per unit area and the thickness of the Ni plating film.

**[Table 2]**

| Thickness of Ni Plating Film (µm) | Capacitance per Unit Area (µF/cm²) |
|---|---|
| 0 | 0.08 |
| 5 | 0.30 |
| 10 | 0.85 |
| 15 | 2.20 |

As can be seen from Table 2, the increase in the thickness of the Ni plating film results in a significant increase in the capacitance per unit area. Therefore, in the case of the porous plating film according to Example 1, it is believed that the actual specific surface area is higher than the BET measurement value when the film thickness is increased to expand the three-dimensional structure.

### Example 2

Example 2 is intended to evaluate a capacitor in the case of using, as the conductive base material, a wire-like Ni plating film obtained with the use of a Ni bath which is different from that in Example 1.

### <Pretreatment>

In the same way as in Example 1, Cu foil with a thickness of 10 µm was prepared, and provided with Pd fine particles thereon.

### <Formation of Conductive Base Material>

The electroless Ni plating solution and plating conditions shown in the following Table 3 were used to form, on the Cu foil, an electroless Ni plating film with a thickness of 5 µm to serve as the conductive base material. In addition, a sample with no electroless Ni plating film formed was also left as a comparative example,

**[Table 3]**

| Nimden KPR-11 (C.Uyemura & Co.,Ltd.) | |
|---|---|
| Acetylene Glycol-Based Additive | 1 g/L |
| Nonionic Surfactant (NYMEEN T2-210 NOF CORPORATION) | 1 g/L |
| pH | 6.5 |
| Bath Temperature | 77°C |

The surface of the obtained electroless Ni plating film was observed by an SEM (scanning electron microscope). As a result, it was confirmed that the plating film had a wire-like form. FIG. 4 shows an SEM photograph of the surface of this electroless Ni plating film.

### <Formation of Dielectric Film>

Next, a dielectric film composed of TiO₂ was formed by CVD on the surface of the electroless Ni plating film. The thickness of the dielectric film composed of TiO₂ was about 100 nm.

It is to be noted that a dielectric film composed of TiO₂ was formed by CVD directly on the Cu foil in the case of the comparative example.

### <Formation of Opposed Conductor>

Next, in the same way as in Example 1, an opposed conductor film was formed, and aluminum foil to serve as the second extraction electrode was then provided, thereby completing a capacitor as each sample.

### <Evaluation and Consideration>

For the sample with the electroless Ni plating film formed to serve as the conductive base material, the specific surface area of the electroless Ni plating film per volume (S/V) in accordance with a BET method was 23400 mm²/mm³. In addition, the capacitance per unit area obtained in the same way as in Example 1 was 310 µF/cm². It is to be noted that the capacitance per unit area was 0.3 µF/cm² in the case of the comparative example,

The use of the wire-like Ni plating film for the conductive base material as in the case of Example 2 allows the conductive base material to be provided with a higher specific surface area and allows the capacitor to be provided with a higher capacitance than in Example 1.

### Example 3

Example 3 is intended to evaluate a capacitor in the case of using, as the conductive base material, a broccoli-like Ni plating film obtained with the use of an Ni bath which is different from those in Examples 1 and 2.

### <Pretreatment>

In the same way as in Example 1, Cu foil with a thickness of 10 µm was prepared, and provided with Pd fine particles thereon.

### <Formation of Conductive Base Material>

The electroless Ni plating solution and plating conditions shown in the following Table 4 were used to form, on the Cu foil, an electroless Ni plating film with a thickness of 5 µm to serve as the conductive base material.

**[Table 4]**

| ICP Nicolon GM-NPE (OKUNO CHEMICAL INDUSTRIES CO., LTD.) | |
|---|---|
| Acetylene Glycol-Based Additive | 1 g/L |
| Nonionic Surfactant (NYMEEN L-207 NOF CORPORATION) | 1 g/L |
| pH | 4.6 |
| Bath Temperature | 80°C |

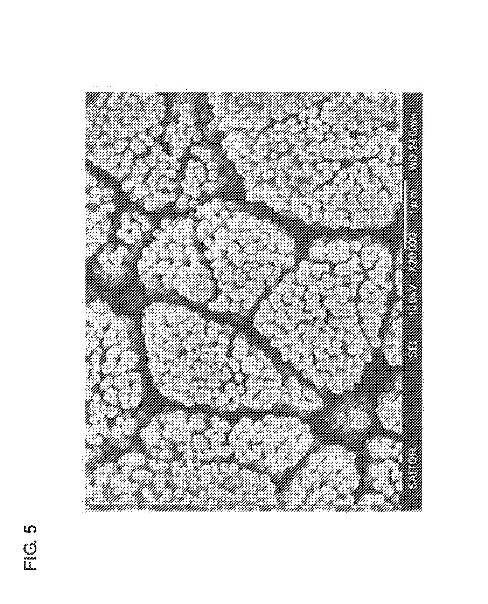

The surface of the obtained electroless Ni plating film was observed by an SEM (scanning electron microscope). As a result, it was confirmed that the plating film had a broccoli-like form. FIG. 5 shows an SEM photograph of the surface of this electroless Ni plating film.

### <Formation of Dielectric Film>

Next, a dielectric film composed of TiO₂ was formed by CVD on the surface of the electroless Ni plating film. The thickness of the dielectric film composed of TiO₂ was about 100 nm.

### <Formation of Opposed Conductor>

Next, in the same way as in Example 1, an opposed conductor film was formed, and aluminum foil to serve as the second extraction electrode was provided, thereby completing a capacitor as each sample.

### <Evaluation and Consideration>

For the sample with the electroless Ni plating film formed to serve as the conductive base material, the specific surface area of the electroless Ni plating film per volume (S/V) in accordance with a BET method was 72500 mm²/mm³. In addition, the capacitance per unit area obtained in the same way as in Example 1 was 960 µF/cm².

The use of the broccoli-like Ni plating film for the conductive base material as in the case of Example 3 allows the conductive base material to be provided with a higher specific surface area and allows the capacitor to be provided with a higher capacitance than in Examples 1 and 2.

## Claims

1. A capacitor comprising: a conductive base material; a dielectric film formed along a surface of the conductive base material; and an opposed conductor formed so as to be opposed to the conductive base material with the dielectric film interposed therebetween, wherein the conductive base material comprises a plating film having a specific surface area of 100 mm²/mm³ or more.

2. The capacitor according to claim 1, wherein the conductive base material is composed of a plating deposition containing at least one of Ni and Cu as a main constituent,

3. The capacitor according to claim 1 or 2, wherein the plating film constituting the conductive base material has a porous form.

4. The capacitor according to claim 1 or 2, wherein the plating film constituting the conductive base material has a wire-like form.

5. The capacitor according to claim 1 or 2, wherein the plating film constituting the conductive base material has a broccoli-like form.

6. A method for manufacturing a capacitor, the method comprising the steps of: forming a conductive base material composed of a plating film having a specific surface area of 100 mm²/mm² or more by electrolytic plating or electroless plating; forming a dielectric film along a surface of the conductive base material; and forming an opposed conductor on a surface of the dielectric film.

7. The method for manufacturing a capacitor according to claim 6, wherein a plating solution for use in the electrolytic plating or the electroless plating contains a surfactant having an acetylene group.
